# EUROPÄISCHE PATENTSCHRIFT

(11) **EP 3 221 092 B1**
(45) Veröffentlichungstag und Bekanntmachung des Hinweises auf die Patenterteilung: **15.08.2018**
(21) Anmeldenummer: 15790992.0
(22) Anmeldetag: 09.11.2015
(51) Int. Cl.: B25J 9/00

(54) **VORRICHTUNG UND VERFAHREN ZUR HANDHABUNG VON ARTIKELN WIE GEBINDE, STÜCKGÜTER ODER DERGLEICHEN**
APPARATUS AND METHOD FOR HANDLING ARTICLES SUCH AS CONTAINERS, PIECE GOODS OR THE LIKE
DISPOSITIF ET PROCÉDÉ DE MANIPULATION D'ARTICLES TELS QUE DES GROUPEMENTS D'ARTICLES, DES COLIS OU ANALOGUES

(30) Priorität: 17.11.2014 DE 102014223410
(43) Veröffentlichungstag der Anmeldung: 27.09.2017
(73) Patentinhaber: Krones Aktiengesellschaft, 93073 Neutraubling (DE)
(72) Erfinder: WESTERMEIER, Christian, 93073 Neutraubling (DE); UNTERSEHER, Josef, 93073 Neutraubling (DE); KOLLMUSS, Manuel, 93073 Neutraubling (DE); EHBERGER, Marco, 93073 Neutraubling (DE); HARTL, Michael, 93073 Neutraubling (DE); ZEINER, Peter, 93073 Neutraubling (DE)
(74) Vertreter: Benninger, Johannes
(86) Internationale Anmeldenummer: PCT/EP2015/076082
(87) Internationale Veröffentlichungsnummer: WO 2016/078953

(56) Entgegenhaltungen:
- CN-A- 104 057 442
- DE-A1-102010 007 631
- DE-A1-102013 208 082
- JP-A- 2012 045 710
- US-A1- 2013 142 608

## Beschreibung

Die vorliegende Erfindung betrifft eine Vorrichtung sowie ein Verfahren zur Handhabung von Artikeln wie Gebinde, Stückgüter oder dergleichen.

Bekannte Verpackungs- oder Palettieranlagen zum Stapeln und Palettieren von Objekten wie Paketen oder Gebinden mit mehreren Artikeln wie bspw. Getränkebehältern weisen üblicherweise Horizontalfördereinrichtungen mit Förderbändern auf, auf denen die Stückgüter oder Gebinde in ununterbrochener oder unregelmäßiger Folge zu einer Handhabungseinrichtung befördert werden. Dort erfolgt eine Verschiebung, Ausrichtung und/oder Drehen einzelner Stückgüter oder Gebinde, um diese in eine geeignete räumliche Anordnung zu bringen, die eine Basis bildet, um die Stückgüter oder Gebinde in nachgeordneten Gruppierstationen zu stapelfähigen Stückgut- oder Gebindelagen zusammenzuschieben.

In aktuellen Abfüll- und Verpackungslinien werden unterschiedliche Verfahren zum Drehen von Gebinden eingesetzt, die bspw. geeignete bewegliche Anschläge oder zwei Bänder mit unterschiedlichen Geschwindigkeiten aufweisen können. Bekannte Handhabungseinrichtungen können auch mit Greifern versehen sein, die bspw. an einem Portalsystem aufgehängt und in einem definierten Bewegungsbereich verschoben, rotiert und zudem in vertikaler Richtung bewegt werden können, um einzelne Stückgüter oder Gebinde zum Drehen und/oder Verschieben anheben zu können. Die Greifer können bspw. auch an Mehrachsroboterarmen angeordnet sein, die seitlich an den Horizontalfördereinrichtungen platziert sind.

Bei einer solchen Handhabung von Stückgütern oder Gebinden werden diese in der Praxis zum Zwecke eines Versetzens und/oder ihrer Ausrichtung erfasst, angehoben und in eine gewünschte Position bzw. Orientierung innerhalb einer Gruppierung überführt. Hierzu sind aus dem Stand der Technik bereits zahlreiche Greifvorrichtungen bekannt, so bspw. aus der EP 2 388 216 A1. Diese bekannte Greifvorrichtung besitzt zwei horizontal voneinander beabstandete und an einem zwischengeordneten Träger über mechanische Verbindungen angeordnete Greifarme. Die Greifarme können aufeinander zubewegt werden, um Objekte zu erfassen. Weiter sind die Greifarme bei definierter Krafteinwirkung in vertikaler Richtung und entgegen dem Träger vom Träger lösbar. Am freien Ende besitzen beide Greifarme Klemmbacken, die bei Erfassen von Objekten mit den jeweiligen Objekten in Oberflächenkontakt stehen.

Eine weitere Greifvorrichtung zeigt bspw. die DE 102 04 513 A1. Dort sind mehrere sich gegenüberliegende Greifarme in einem Mittelstück geführt. Ein Greifarm ist mittels eines Stellgliedes in Bezug auf einen weiteren Greifarm verschiebbar, so dass beide Greifarme geschlossen werden können. An den unteren Enden der Greifarme sind an den einander zugewandten Seiten Greifabschnitte zum Greifen von Baustoffpaketen vorgesehen.

Darüber hinaus gibt es weitere Handhabungseinrichtungen zum Greifen, Verschieben, Drehen und/oder Versetzen von Artikeln oder Gebinden, die auf sog. Deltarobotern oder Parallelkinematik-Robotern basieren, welche in einer dreiarmigen Ausführung auch als Tripode bezeichnet werden. Jeder der Arme eines solchen Tripods oder Deltaroboters besteht aus einem an der Basis um eine gestellfeste Schwenkachse angetrieben verschwenkbar angeordneten Oberarm und einem mit dem Oberarm und dem Koppelelement gelenkig verbundenen Unterarm. Der Unterarm ist hierbei passiv, frei von einem Antrieb zu dessen Verschwenkung gegenüber dem Oberarm oder dem Koppelelement ausgeführt. Einer oder mehrere der Unterarme können bspw. über Kugelgelenke mit den jeweils zugehörigen Oberarmen und dem Koppelelement verbunden sein. Ein solcher einzelner Unterarm ist frei schwenkbar und besitzt keine Eigenstabilität. Alle Oberarme eines Deltaroboters sind jeweils um vorzugsweise innerhalb einer gemeinsamen Ebene liegende Schwenkachsen verschwenkbar angetrieben gelagert. Drei mit dem Koppelelement und jeweils mit ihrem zugehörigen Oberarm verbundene Unterarme bilden in jeder Position ein Kraftdreieck, das sich nur bewegen lässt, wenn die drei Oberarme synchron die für sie berechneten Schwenkbewegungen um deren gestellfeste Schwenkachsen ausführen. Zwei oder mehr Schwenkachsen können parallel verlaufen; in der Regel weisen alle Schwenkachsen zwei Schnittpunkte mit anderen Schwenkachsen auf.

Wenigstens einer der Unterarme kann aus zwei auch als Elle und Speiche bezeichneten, ein Parallelogrammgestänge bildenden Gestängeelementen bestehen, um das Koppelelement in zumindest einer vorgegebenen Ausrichtung relativ zur Basis zu führen. Das Koppelelement dient dabei als Arbeitsplattform, die in der Praxis auch als Tool-Center-Point (TCP) bezeichnet wird. An diesem TCP kann ein Manipulator angeordnet sein, bspw. in Gestalt von gegeneinander zustellbaren Greifarmen o. dgl. Handhabungseinrichtung, so dass damit Artikel, Gebinde o. dgl. Stückgüter ergriffen und gedreht, verschoben oder von einer Auflagefläche angehoben werden können.

Der an der Arbeitsplattform bzw. dem TCP angeordnete Manipulator kann wahlweise drehbar gelagert sein, um den Manipulator ausrichten oder eine gewünschte Drehung der Artikel oder Stückgüter ausführen zu können. Anstelle einer antreibbar drehbaren Lagerung des Manipulators am Koppelelement ist grundsätzlich auch denkbar, den Manipulator unverdrehbar am Koppelelement anzuordnen und das gesamte Koppelelement unter entsprechender Ausgleichbewegung der Arme vermittels der Teleskopwelle gegenüber der Basis zu verdrehen. Damit einhergehend ist jedoch der Nachteil eines nur eingeschränkten Drehwinkels des Koppelelements. Die Einschränkung ergibt sich durch das Erreichen von Endanschlägen der gelenkigen Verbindungen der Oberarme und/oder des Koppelelements mit den Unterarmen und/oder dem gegenseitigen Kontakt benachbarter Unterarme.

Aus der DE 10 2010 006 155 A1, aus der DE 10 2013 208 082 A1 sowie aus der US 8 210 068 B1 sind derartige Handhabungseinrichtung mit Tripoden bekannt. Diese besitzen eine hohe Genauigkeit und können darüber hinaus zur Handhabung der jeweiligen Artikel schnell verfahren werden können. Um die jeweiligen Artikel entgegennehmen und nach der Handhabung bzw. Positionierung wieder freigeben zu können, sind Bestandteil aus dem Stand der Technik bekannter Tripods bewegbare Manipulatoren. Beispielsweise kann es sein, dass die Manipulatoren pneumatisch, hydraulisch oder elektrisch angesteuert werden, so dass hierzu mit dem entsprechenden Manipulator Leitungsverbindungen gekoppelt sind. Hinsichtlich einer Bewegungsfreiheit des Tripods können diese Leitungsverbindungen hinderlich sein. Zudem müssen die Leitungsverbindungen sicher verlegt werden, so dass das Risiko einer Beschädigung von Leitungsverbindungen bei Betrieb des Tripods ausgeschlossen werden kann. Auch aus diesem Grunde besitzen aus dem Stand der Technik bekannte Tripods aufgrund der umständlichen Koppelung zwischen einem Manipulator und einem zugeordneten Aktor einen komplexen Aufbau und eine teilweise eingeschränkte Bewegungsfreiheit.

Aufgabe der Erfindung ist daher eine dementsprechende Vorrichtung zur Handhabung von Artikeln zur Verfügung zu stellen, welche sich durch einen einfachen Aufbau und eine hohe Bewegungsfreiheit auszeichnet. Weiter ist Aufgabe, ein Verfahren zur Verfügung zu stellen, welches die Handhabung von Artikeln mit hoher Bewegungsfreiheit erlaubt. Zudem soll das Verfahren einfach umgesetzt werden können.

Die obigen Aufgaben werden durch eine Vorrichtung und ein Verfahren gelöst, welche die Merkmale in den unabhängigen Ansprüchen 1 und 10 umfassen. Weitere vorteilhafte Ausgestaltungen werden durch die jeweiligen abhängigen Ansprüche beschrieben.

Die erfindungsgemäße Vorrichtung ist ausgebildet zur Handhabung von Artikeln wie Gebinde, Stückgüter oder dergleichen. Insbesondere können die Artikel durch Getränkebehältnisse und/oder durch mehrere als Gebinde zusammengefasste Getränkebehältnisse ausgebildet sein.

Weiter umfasst die Vorrichtung eine obere Aufhängung, an welcher wenigstens drei drehbar angetriebene Stellarme befestigt sind. Jedem der wenigstens drei Stellarme kann zum Zwecke seines Antriebs ein eigener Aktor zugeordnet sein, der bevorzugt als Elektromotor ausgebildet ist und eine drehende Bewegung der Stellarme bewirkt. Die Stellarme können direkt an ihren jeweils zugeordneten Aktor angeflanscht sein. Die Aktoren können von der oberen Aufhängung getragen werden. Insbesondere kann es sein, dass die Aktoren hierbei hängend an der oberen Aufhängung angeordnet sind. Die Drehachsen der wenigstens drei Stellarme können parallel zueinander verlaufen. Die Aktoren der wenigstens drei Stellarme können mit einer Steuerungseinheit in Verbindung stehen, welche eine Bewegung eines oder mehrerer der wenigstens drei Stellarme zur bestimmten Positionierung des nachfolgend noch näher beschriebenen Manipulators vorgibt.

Die wenigstens drei Stellarme bestehen jeweils aus wenigstens zwei relativ zueinander schwenkbaren Armabschnitten und können unabhängig voneinander betätigt werden. Schwenkachsen von wenigstens zwei relativ zueinander schwenkbaren Armabschnitten können parallel zueinander verlaufen. In besonders bevorzugten Ausführungsformen ist ein jeweiliger unterer Armabschnitt durch wenigstens zwei parallele Gestänge ausgebildet, die mit dem Manipulator mechanisch in Verbindung stehen. Über die wenigstens drei Stellarme kann der Manipulator somit bewegt bzw. verfahren werden.

Der vorherig bereits erwähnte Manipulator der erfindungsgemäßen Vorrichtung umfasst ein oder mehrere Mittel zum Greifen der Artikel und ist mit den wenigstens drei Stellarmen mechanisch gekoppelt. Hierbei kann sinnvollerweise den wenigstens drei Stellarmen und dem Manipulator jeweils wenigstens ein Gelenk zwischengeordnet sein. So kann durch eine Bewegung eines oder mehrerer der wenigstens drei Stellarme eine Position des Manipulators vorgegeben werden. In besonders bevorzugten Ausführungsformen sind die wenigstens drei Stellarme mit einem Tragring gelenkig verbunden, welcher weiterhin mit dem Manipulator mechanisch gekoppelt ist. Die mechanische Koppelung zwischen dem Tragring und dem Manipulator kann eine relative Verdrehung des Manipulators gegenüber dem Tragring erlauben.

Auch umfasst die erfindungsgemäße Vorrichtung wenigstens eine Antriebswelle, die drehfest mit dem Manipulator in Verbindung steht, so dass der Manipulator über die wenigstens eine Antriebswelle gedreht werden kann. Die Position der wenigstens einen Antriebswelle kann in besonders bevorzugten Ausführungsformen derart gewählt sein, dass sich die wenigstens eine Antriebswelle zwischen sämtlichen der wenigstens drei Stellarmen befindet bzw. dass sämtliche der wenigstens drei Stellarme um die wenigstens eine Antriebswelle angeordnet sind. Die wenigstens eine Antriebswelle kann über jeweils ein kardanisch wirkendes Gelenk mit einem nachfolgend noch näher beschriebenen Aktor sowie mit dem Manipulator in Verbindung stehen. Das jeweilige kardanisch wirkende Gelenk kann in einfachen Ausführungsformen als Kardangelenk ausgebildet sein. Der Begriff ist jedoch breit zu verstehen, so dass beispielsweise auch Kugelgelenke und/oder weitere kardanisch wirkende Gelenke im Rahmen denkbarer Ausführungsformen der erfindungsgemäßen Vorrichtung vorgesehen sein können.

Zudem ist mindestens eine Betätigungswelle als Bestandteil der erfindungsgemäßen Vorrichtung vorgesehen, über welche mindestens eine Betätigungswelle die ein oder mehreren Mittel zum temporären Greifen und Freigeben von Artikeln angesteuert werden können. Die ein oder mehreren Mittel können hierzu mit der mindestens einen Betätigungswelle in mechanischem Eingriff stehen.

Weiter umfasst die erfindungsgemäße Vorrichtung wenigstens einen Mitnehmer, der drehfest mit der wenigstens einen Antriebswelle in Verbindung steht und über welchen zwischen der wenigstens einen Antriebswelle und der mindestens einen Betätigungswelle eine mechanische Koppelung zur drehenden Mitführung der mindestens einen Betätigungswelle um die Längsachse der wenigstens einen Antriebswelle ausgebildet ist. Die mindestens eine Betätigungswelle kann somit als Satellit ausgebildet sein, welcher sich bei drehender Bewegung der Antriebswelle vorzugsweise entlang einer Kreisbahn um die Längsachse der Antriebswelle bewegt. Denkbar ist hierbei, dass der Satellit die wenigstens eine Antriebswelle vollständig umkreist. Weiter kann es sein, dass der Satellit die Antriebswelle nicht vollständig umkreist und sich an einer bestimmten Stelle in entgegengesetzter Richtung zurück in seine ursprüngliche Ausgangsposition bewegt.

Durch die erfindungsgemäße Mitführung der mindestens einen Betätigungswelle, welche zur Ansteuerung der ein oder mehreren Mittel zum Greifen und Freigeben von Artikeln ausgebildet ist, besteht die Möglichkeit, auf umständliche Leitungsverbindungen im Bereich des Manipulators zu verzichten. Da die mindestens eine Betätigungswelle drehend mitgeführt wird, wird ein Drehvorgang des Manipulators durch die mindestens eine Betätigungswelle nicht behindert.

In besonders bevorzugten Ausführungsformen kann vorgesehen sein, dass die Längsachse der mindestens einen Betätigungswelle mit der Längsachse der wenigstens einen Antriebswelle einen spitzen Winkel einschließt. Die mindestens eine Betätigungswelle und die wenigstens eine Antriebswelle können daher eine nicht parallele Orientierung besitzen. Hierzu kann die mindestens eine Betätigungswelle über ein kardanisch wirkendes Gelenk mit den ein oder mehreren Mitteln zum Greifen der Artikel in Verbindung stehen. Weiter kann die mindestens eine Betätigungswelle an ihrem in Richtung nach oben weisenden Ende an ein weiteres kardanisch wirkendes Gelenk gekoppelt sein. Allerdings kann auch vorgesehen sein, dass die Längsachse der mindestens einen Betätigungswelle und die Längsachse der wenigstens einen Antriebswelle parallel zueinander orientiert sind.

Weiter kann die wenigstens eine Antriebswelle mit einem Aktor in Verbindung stehen, welcher drehfest auf der oberen Aufhängung aufsitzt. Beispielsweise kann eine Drehachse der wenigstens einen Antriebswelle sich durch den Aktor und/oder durch einen Schwerpunkt des Aktors erstrecken. Der Aktor kann somit ggf. über ein zwischengeordnetes kardanisch wirkendes Gelenk an die wenigstens eine Antriebswelle angeflanscht sein.

Zudem können die ein oder mehreren Mittel wenigstens zwei gegenüberliegende Klemmbacken umfassen, welche bei Ansteuerung über die mindestens eine Betätigungswelle selektiv zugestellt oder geöffnet werden. Beispielsweise kann es sein, dass lediglich eine der gegenüberliegenden Klemmbacken über die mindestens eine Betätigungswelle aktiv bewegt wird, wohingegen keine aktive Bewegung der jeweiligen gegenüberliegenden Klemmbacke über die mindestens eine Betätigungswelle bewirkt wird. In denkbaren weiteren Ausführungsformen kann die Vorrichtung ein oder mehrere Übertragungselemente besitzen, welche eine rotierende Bewegung der mindestens einen Betätigungswelle in eine aktive Verstellung sämtlicher der wenigstens zwei gegenüberliegenden Klemmbacken überführen. Die jeweiligen Artikel können mittels der Klemmbacken gegriffen und nachfolgend durch eine Bewegung des Manipulators versetzt werden. Vorstellbar ist hierbei, dass die Artikel auf einer Horizontalfördereinrichtung transportiert werden, durch die Vorrichtung bzw. den Manipulator gegriffen und auf der Horizontalfördereinrichtung versetzt werden. Beispielsweise können die Artikel hierbei gegenüber einer Transportgeschwindigkeit der Horizontalfördereinrichtung verzögert oder beschleunigt und ggf. gedreht und/oder schräg zu einer Förderrichtung der Horizontalfördereinrichtung versetzt werden.

Auch kann es sein, dass mehreren der wenigstens zwei sich gegenüberliegenden Klemmbacken eine eigene Betätigungswelle zugeordnet ist, mittels welcher die jeweilige Klemmbacke aktiv verstellt werden kann. Die Erfindung ist daher nicht auf Ausführungsformen mit lediglich einer Betätigungswelle beschränkt. Vielmehr sind Ausführungsformen vorstellbar, bei welchen die Vorrichtung mehrerer Betätigungswellen umfasst, die jeweils ein oder mehrere Mittel zum temporären Greifen und Freigeben von Artikeln ansteuern können.

Weiter kann es sein, dass die wenigstens eine Antriebswelle und die mindestens eine Betätigungswelle über mindestens ein Drehmomentübertragungsmittel mechanisch miteinander in Verbindung stehen, über welches Drehmomentübertragungsmittel bei rotierender Bewegung der wenigstens einen Antriebswelle die mindestens eine Betätigungswelle zwangsweise mit einer Eigendrehung um ihre Längsachse beaufschlagbar ist. Somit kann es sein, dass die wenigstens eine Antriebswelle über ihren zugeordneten Aktor mit einem Drehmoment beaufschlagt wird und das Drehmoment von der wenigstens einen Antriebswelle an die mindestens eine Betätigungswelle weitergegeben wird, so dass hieraus eine Eigendrehung der mindestens einen Betätigungswelle resultiert.

Beispielsweise kann es sein, dass die ein oder mehreren Mittel des Manipulators einen oder mehrere Artikel greifen. Soll hierauf folgend der Manipulator über die wenigstens eine Antriebswelle gedreht werden, so ist es notwendig, die mindestens eine Betätigungswelle im Verlauf der Drehbewegung des Manipulators rotierend zu bewegen, um zu verhindern, dass die Artikel durch den Manipulator während seines Drehens losgelassen werden. Sind die ein oder mehreren Mittel durch sich gegenüberliegende Klemmbacken ausgebildet, so wird ihre relative Position aufgrund einer Rotation der mindestens einen Betätigungswelle während eines Drehens des Manipulators beibehalten, so dass die Artikel über die beiden Klemmbacken während eines Drehens des Manipulators weiterhin gegriffen werden können.

Auch kann es sein, dass das mindestens eine Drehmomentübertragungsmittel wenigstens eine Übersetzungsstufe besitzt, mittels welcher die mindestens eine Betätigungswelle mit erhöhter Drehfrequenz gegenüber der wenigstens einen Antriebswelle beaufschlagbar ist. Eine erhöhte Drehfrequenz der mindestens einen Betätigungswelle kann notwendig sein um, wie vorhergehend erwähnt, die Artikel auch bei Drehbewegung des Manipulators weiterhin zu greifen.

Insbesondere können die Drehmomentübertragungsmittel zur Beaufschlagung der mindestens einen Betätigungswelle mit ihrer Eigendrehung wenigstens eine Riemen- und/oder Kettenkonstruktion besitzen, welche die wenigstens eine Antriebswelle und die mindestens eine Betätigungswelle zur zeitsynchronen Drehbewegung miteinander koppelt. In alternativen Ausführungsformen können beispielsweise Zahnradverbindungen bzw. eine Zahnradgetriebestufe vorgesehen sein, welche die wenigstens eine Antriebswelle und die mindestens eine Betätigungswelle zur zeitsynchronen Drehbewegung miteinander koppeln.

Zudem können die wenigstens eine Antriebswelle und die mindestens eine Betätigungswelle teleskopierbar ausgebildet sein. Hierzu können die wenigstens eine Antriebswelle und die mindestens eine Betätigungswelle jeweils wenigstens zwei teleskopierbare bzw. teleskopierbar miteinander verbundene Gehäuseteile umfassen. Für den angesprochenen Fachmann ist klar, dass in denkbaren weiteren Ausführungsformen die wenigstens eine Antriebswelle und die mindestens eine Betätigungswelle jeweils auch aus drei, vier oder mehr als vier teleskopierbaren bzw. teleskopierbar miteinander in Verbindung stehenden Gehäuseteilen gebildet sein können. Insbesondere können die wenigstens zwei teleskopierbaren Gehäuseteile jeweils zumindest abschnittsweise eine hohlzylindrische Formgebung besitzen.

Die Erfindung betrifft darüber hinaus ein Verfahren zur Handhabung von Artikeln wie Gebinde, Stückgüter oder dergleichen. Hierbei können Merkmale, welche vorhergehend zu diversen Ausführungsformen der erfindungsgemäßen Vorrichtung beschrieben wurden, bei denkbaren Ausführungsformen des erfindungsgemäßen Verfahrens vorgesehen sein. Auch können Merkmale, welche nachfolgend zu diversen Ausführungsformen des erfindungsgemäßen Verfahrens beschrieben werden, bei denkbaren Ausführungsformen der erfindungsgemäßen Vorrichtung vorgesehen sein.

Das erfindungsgemäße Verfahren wird mit einer Vorrichtung umgesetzt, welche eine obere Aufhängung umfasst, an der wenigstens drei drehbar angetriebene Stellarme befestigt sind. Die wenigstens drei Stellarme bestehen jeweils aus wenigstens zwei relativ zueinander schwenkbaren Armabschnitten und können unabhängig voneinander betätigt bzw. unabhängig voneinander verstellt werden. Die jeweilige Verstellung kann über eine Steuerungseinheit vorgegeben werden.

Weiter besitzt die Vorrichtung, mit welcher das erfindungsgemäße Verfahren umgesetzt wird, einen Manipulator, welcher ein oder mehrere Mittel zum Greifen der Artikel umfasst und mit den wenigstens drei Stellarmen mechanisch gekoppelt ist, so dass durch eine Bewegung eines oder mehrerer der wenigstens drei Stellarme eine Position des Manipulators vorgegeben werden kann.

Auch sind für die Vorrichtung, mit welcher das erfindungsgemäße Verfahren umgesetzt wird, wenigstens eine Antriebswelle vorgesehen, die drehfest mit dem Manipulator in Verbindung steht und mindestens eine Betätigungswelle, über welche die ein oder mehreren Mittel zum temporären Greifen und Freigeben von Artikeln angesteuert werden können.

Die mindestens eine Betätigungswelle ist mit der wenigstens einen Antriebswelle über einen Mitnehmer mechanisch gekoppelt, so dass bei rotierender Bewegung der wenigstens einen Antriebswelle der Manipulator und die mindestens eine Betätigungswelle um die Längsachse der wenigstens einen Antriebswelle drehend bewegt werden. Insbesondere kann der Mitnehmer als Dreharm ausgebildet sein, welcher sich von der wenigstens einen Antriebswelle weg in Richtung der mindestens einen Betätigungswelle erstreckt und die mindestens eine Betätigungswelle zum Zwecke ihrer drehenden Mitnahme greift. Der Mitnehmer bzw. der Dreharm kann hierzu eine Öffnung besitzen, durch welche die mindestens eine Betätigungswelle hindurchtritt.

In besonders bevorzugten Ausführungsformen können die wenigstens eine Antriebswelle und die mindestens eine Betätigungswelle über mindestens ein Drehmomentübertragungsmittel mechanisch miteinander in Verbindung stehen, welches Drehmomentübertragungsmittel bei rotierender Bewegung der Antriebswelle die mindestens eine Betätigungswelle um ihre Längsachse dreht. Insbesondere kann es sein, dass das Drehmomentübertragungsmittel die mindestens eine Betätigungswelle um ihre Längsachse mit erhöhter Drehfrequenz gegenüber der mindestens einen Antriebswelle dreht.

Vorstellbar ist darüber hinaus, dass die mindestens eine Betätigungswelle um die Längsachse der wenigstens einen Antriebswelle um einen Drehwinkel von wenigstens 360° drehend bewegt wird. Synchron hierzu kann der Manipulator ebenso um einen Drehwinkel von wenigstens 360° drehend bewegt werden. Sofern Artikel mittels des Manipulators um etwas mehr als 180° gedreht werden sollen, kann es sinnvoll sein, nach Freigabe der Artikel den Manipulator mit gleicher Drehrichtung um insgesamt 360° weiter zu drehen und hierbei in die ursprüngliche Drehposition zurückzuführen. Bei Ausführungsformen mit möglicher Drehung des Manipulators und der mindestens einen Betätigungswelle um 360° ist das Verfahren mit erhöhtem Durchsatz einer Handhabung von Artikeln durchführbar. Hierbei kann vorgesehen sein, dass im Rahmen des Verfahrens der Manipulator lediglich in einer Drehrichtung gedreht wird, während durchgehend kein Drehen mit umgekehrter Drehrichtung erfolgt.

Zudem kann es sein, dass die ein oder mehreren Mittel zum temporären Greifen und Freigeben von Artikeln durch wenigstens zwei sich gegenüberliegende Klemmbacken gebildet sind, welche bei Ansteuerung über die mindestens eine Betätigungswelle selektiv zugestellt oder geöffnet werden können. Wie bereits erwähnt, kann es hierbei sein, dass lediglich eine der wenigstens zwei sich gegenüberliegenden Klemmbacken über die mindestens eine Betätigungswelle aktiv bewegt wird. Auch ist vorstellbar, dass beide der wenigstens zwei sich gegenüberliegenden Klemmbacken durch die mindestens eine Betätigungswelle aktiv bewegt werden bzw. relativ zueinander verstellt werden, um die jeweiligen Artikel zu greifen.

Weiter kann es sein, dass bei einer Betätigung eines oder mehrerer der wenigstens drei drehbar angetriebenen Stellarme die mindestens eine Betätigungswelle und die wenigstens eine Antriebswelle jeweils teleskopisch verstellt werden.

Bei bevorzugten Ausführungsformen können die Artikel während ihrer Handhabung auf einer Horizontalfördereinrichtung transportiert werden und hierbei vom Manipulator gegriffen werden. Nach Greifen kann der Manipulator ein Drehen und/oder einen seitlichen Versatz schräg zur Transportrichtung der Horizontalfördereinrichtung und/oder eine Verzögerung und/oder Beschleunigung der jeweiligen gegriffenen Artikel gegenüber einer Transportgeschwindigkeit der Horizontalfördereinrichtung bewirken.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsform einer erfindungsgemäßen Vorrichtung.
Fig. 2 zeigt eine schematische Detailansicht eines oberen Teils der Vorrichtung aus Fig. 1.
Fig. 3 zeigt eine schematische Detailansicht eines unteren Teils der Vorrichtung aus den Figuren 1 und 2.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

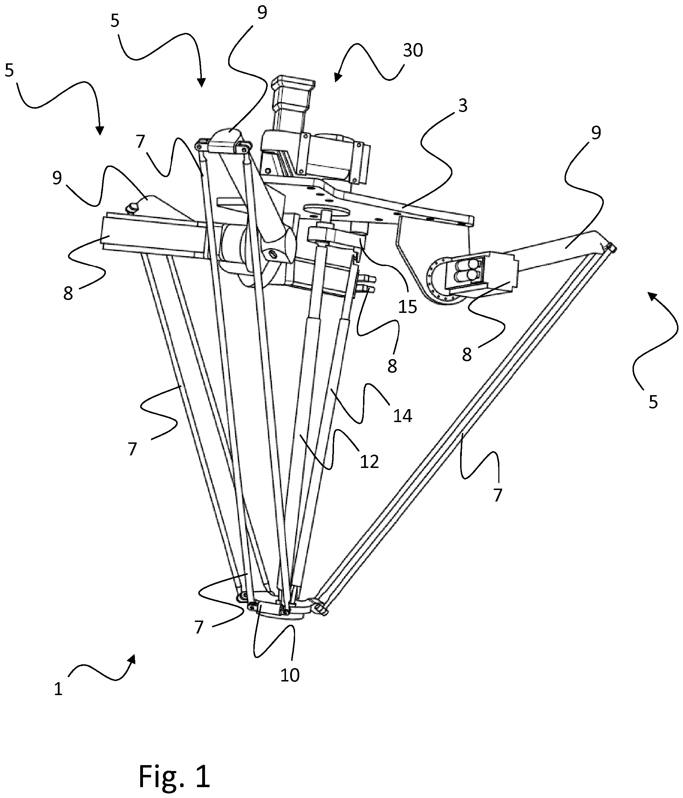

Die Fig. 1 zeigt eine schematische Perspektivansicht einer Ausführungsform einer erfindungsgemäßen Vorrichtung 1. Die Vorrichtung 1 ist ausgebildet zum Greifen, Drehen und Versetzen zu Gebinden zusammengefasster Getränkebehältnisse, die in Fig. 1 nicht mit dargestellt sind.

Wie in Fig. 1 zu erkennen, besitzt die Vorrichtung 1 eine obere Aufhängung 3. An der oberen Aufhängung 3 sind drei Stellarme 5 über einen jeweils zugeordneten Antrieb 8 drehbar befestigt. Die drehende Bewegung der Stellarme 5 erfolgt hierbei derart, dass ihre Drehachsen parallel zueinander verlaufen.

Weiter bestehen die drei Stellarme 5 aus wenigstens zwei relativ zueinander schwenkbaren Armabschnitten 7 und 9, wobei die unteren Armabschnitte 7 jeweils aus zwei parallel zueinander orientierten Gestängen gebildet sind. Der jeweilige obere Armabschnitt 9 steht mit seinem jeweils zugeordneten Antrieb 8 in Verbindung bzw. ist an seinem jeweils zugeordneten Antrieb 8 angeflanscht.

Zudem können die drei Stellarme 5 unabhängig voneinander bewegt werden. Sämtliche Antriebe 8 stehen hierzu mit einer Steuerungseinheit (nicht in Fig. dargestellt) in Verbindung, welche die Bewegung der Stellarme 5 vorgibt und die Antriebe 8 ansteuert.

Am unteren Ende der drei Stellarme 5 steht ein Manipulator mit den drei Stellarmen 5 derart in Verbindung, dass der Manipulator via eine Bewegung der drei Stellarme 5 zur Handhabung von Artikeln verfahren werden kann. Der Manipulator ist in den Figuren vorliegender Patentanmeldung nicht mit dargestellt. Jedoch zeigt Fig. 1 eine Basis 10, an welcher der Manipulator befestigt ist bzw. über welche der Manipulator getragen wird. In besonders bevorzugten Ausführungsformen kann der Manipulator zwei sich gegenüberliegende Klemmbacken aufweisen, deren relative Beabstandung zum Greifen von Artikeln vorgegeben werden kann.

Gezeigt ist zudem eine Antriebswelle 12, die drehfest mit dem Manipulator in Verbindung steht. Wird die Antriebswelle 12 rotierend bewegt, so dreht der Manipulator aufgrund der drehfesten Verbindung zusammen mit der Antriebswelle 12 bzw. um die Längsachse der Antriebswelle 12.

Die in Fig. 1 der Antriebswelle 12 benachbarte Betätigungswelle 14 ist dazu ausgebildet, ein oder mehrere Mittel des Manipulators zum temporären Greifen und Freigeben von Artikeln anzusteuern. Hierzu kann die Betätigungswelle 14 über einen in Fig. 1 nicht mit dargestellten Aktor drehend bewegt werden. Da über eine Bewegung der Stellarme 5 der Manipulator positioniert wird und die Antriebswelle 12 sowie die Betätigungswelle 14 mit dem Manipulator mechanisch gekoppelt sind, können die Antriebswelle 12 und die Betätigungswelle 14 teleskopiert werden, um zusammen mit dem Manipulator zu verfahren.

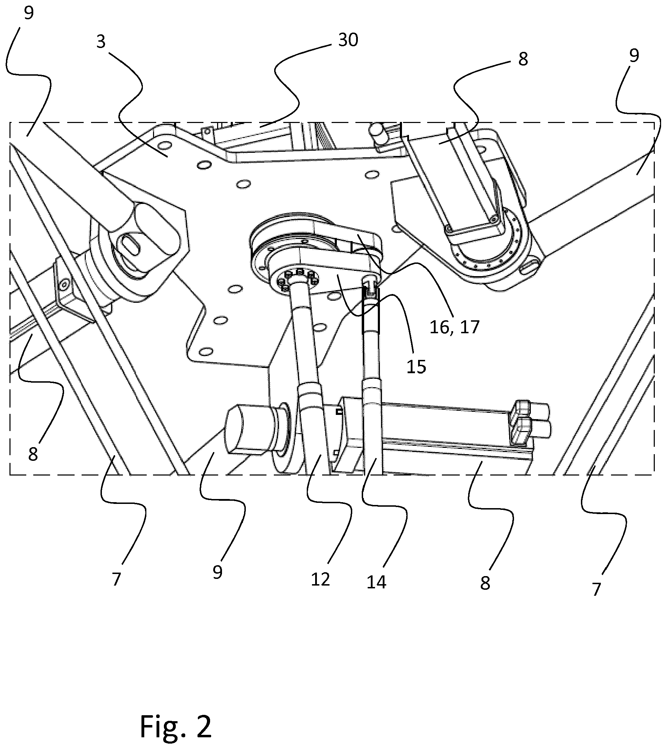

Über einen Mitnehmer 15, der drehfest mit der Antriebswelle 12 in Verbindung steht, ist zwischen der Antriebswelle 12 und der Betätigungswelle 14 eine mechanische Koppelung zur drehenden Mitführung der Betätigungswelle 14 um die Längsachse der Antriebswelle 12 ausgebildet. Wird die Antriebswelle 12 rotierend bewegt, so kreist die Betätigungswelle 14 somit aufgrund der Koppelung beider Wellen 12 und 14 über den Mitnehmer 15 um die Antriebswelle 12 bzw. um die Längsachse der Antriebswelle 12. Die Antriebswelle 12 wird rotierend über den Aktor 30 (vgl. auch Fig. 2) angetrieben, der drehfest auf der oberen Aufhängung 3 aufsitzt.

Da die Mittel zum Greifen und Freigeben von Artikeln durch die Betätigungswelle 14 angesteuert werden, welche bei Rotation der Antriebswelle 12 die Antriebswelle 12 umkreist, wird eine drehende Bewegung des Manipulators nicht durch Leitungsverbindungen, welche bei aus dem Stand der Technik bekannten Vorrichtungen zur Betätigung vorgesehen sind, behindert. Weiter kann eine Drehung der jeweiligen Artikel durch den Manipulator um 360° erfolgen, so dass die in Fig. 1 gezeigte Vorrichtung 1 eine hohe Flexibilität bei Handhabung von Artikeln besitzt.

Die Fig. 2 zeigt eine schematische Detailansicht eines oberen Teils der Vorrichtung 1 aus Fig. 1 und lässt hierbei erkennen, dass die Antriebswelle 12 und die Betätigungswelle 14 über ein Drehmomentübertragungsmittel 16 miteinander in Verbindung stehen, welches als Riemenkonstruktion 17 ausgebildet ist. Aus Gründen der Übersichtlichkeit wurde das Drehmomentübertragungsmittel 16 bzw. die Riemenkonstruktion 17 in Fig. 1 nicht mit dargestellt. Über das Drehmomentübertragungsmittel 16 bzw. die Riemenkonstruktion 17 wird ein Drehmoment der Antriebswelle 12 an die Betätigungswelle 14 weitergegeben, so dass diese synchron mit der Antriebswelle 12 rotiert bzw. um ihre Eigenachse drehend bewegt wird. Die Koppelung zwischen der Antriebswelle 12 und der Betätigungswelle 14 ist hierbei derart, dass eine Drehfrequenz der Betätigungswelle 14 gegenüber einer Drehfrequenz der Antriebswelle 12 größer ausgebildet ist.

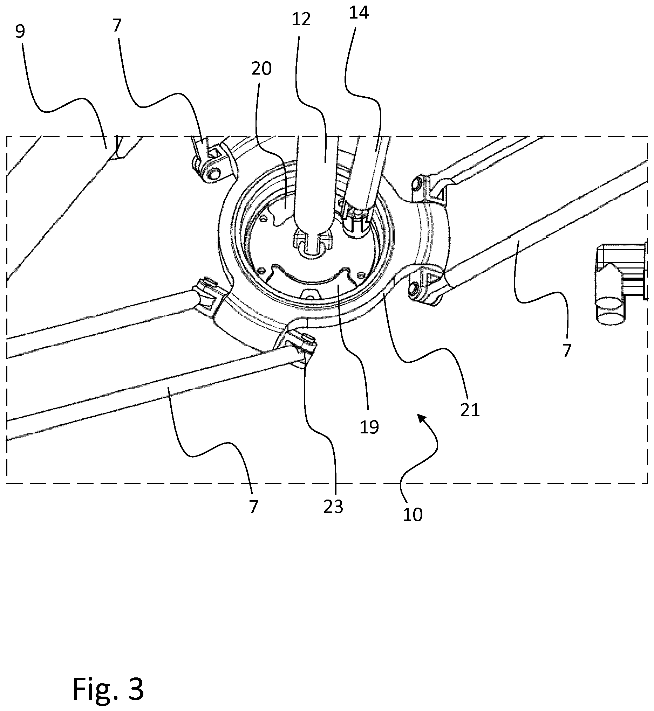

Die Fig. 3 zeigt zudem eine schematische Detailansicht eines unteren Teils der Vorrichtung 1 aus den Figuren 1 und 2. In Fig. 3 sind weiterhin die Antriebswelle 12 sowie die Betätigungswelle 14 zu erkennen. Die Betätigungswelle 14 ist in einer Nut 20 der Basis 10 geführt, welche Nut 20 eine Drehbewegung der Betätigungswelle 14 um die Längsachse der Antriebswelle 12 begrenzt.

Die Basis 10, von welcher der Manipulator getragen wird, besteht aus einem Tragring 21 sowie einem Drehflansch 19. Tragring 21 und Drehflansch 19 können relativ zueinander um die Rotationsachse der Antriebswelle 12 gedreht werden. Die Stellarme 5 bzw. die jeweiligen unteren Abschnitte 7 der Stellarme 5 stehen über Gelenke 23 mit dem Tragring 21 der Basis 10 in Verbindung. Der Drehflansch 19 ist drehfest mit dem Manipulator gekoppelt, so dass bei einer Rotationsbewegung der Antriebswelle 12 der Manipulator relativ zum Tragring 21 der Basis 10 gedreht wird. Die Antriebswelle 12 ist über ein Kardangelenk am Drehflansch 19 befestigt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

1 Vorrichtung
3 Aufhängung
5 Stellarm
7 Unterer Armabschnitt
8 Antrieb
9 Oberer Armabschnitt
10 Basis
12 Antriebswelle
14 Betätigungswelle
15 Mitnehmer
16 Drehmomentübertragungsmittel
17 Riemenkonstruktion; Kettenkonstruktion
19 Drehflansch
20 Nut
21 Tragring
23 Gelenk
30 Aktor

## Patentansprüche

1. Vorrichtung (1) zur Handhabung von Artikeln wie Gebinde, Stückgüter oder dergleichen, umfassend:
- eine obere Aufhängung (3), an welcher wenigstens drei drehbar angetriebene Stellarme (5) befestigt sind, wobei die wenigstens drei drehbar angetriebenen Stellarme (5) jeweils aus wenigstens zwei relativ zueinander schwenkbaren Armabschnitten (7, 9) bestehen und unabhängig voneinander betätigt werden können,
- einen Manipulator, welcher ein oder mehrere Mittel zum Greifen der Artikel umfasst und mit den wenigstens drei Stellarmen (5) mechanisch gekoppelt ist, so dass durch eine Bewegung eines oder mehrerer der wenigstens drei Stellarme (5) eine Position des Manipulators vorgegeben werden kann,
- wenigstens eine Antriebswelle (12), die drehfest mit dem Manipulator in Verbindung steht, so dass der Manipulator über die wenigstens eine Antriebswelle (12) gedreht werden kann und
- mindestens eine Betätigungswelle (14), über welche die ein oder mehreren Mittel zum temporären Greifen und Freigeben von Artikeln angesteuert werden können und **gekennzeichnet durch**
- wenigstens einen Mitnehmer (15), der drehfest mit der wenigstens einen Antriebswelle (12) in Verbindung steht und über welchen zwischen der wenigstens einen Antriebswelle (12) und der mindestens einen Betätigungswelle (14) eine mechanische Koppelung zur drehenden Mitführung der mindestens einen Betätigungswelle (14) um die Längsachse der wenigstens einen Antriebswelle (12) ausgebildet ist.

2. Vorrichtung nach Anspruch 1, bei der die Längsachse der mindestens einen Betätigungswelle (14) mit der Längsachse der wenigstens einen Antriebswelle (12) einen spitzen Winkel einschließt und/oder bei der die Längsachsen der mindestens einen Betätigungswelle (14) und der wenigstens einen Antriebswelle (12) parallel zueinander orientiert sind.

3. Vorrichtung nach Anspruch 1 oder 2, bei der die wenigstens eine Antriebswelle (12) mit einem Aktor (30) in Verbindung steht, welcher drehfest auf der oberen Aufhängung (3) aufsitzt.

4. Vorrichtung nach einem der Ansprüche 1 bis 3, bei der das Mittel oder die Mittel zum Greifen der Artikel wenigstens zwei sich gegenüberliegende Klemmbacken umfasst bzw. umfassen, welche bei Ansteuerung über die mindestens eine Betätigungswelle (14) selektiv zugestellt oder geöffnet werden können.

5. Vorrichtung nach einem der Ansprüche 1 bis 4, bei der die wenigstens eine Antriebswelle (12) und die mindestens eine Betätigungswelle (14) über mindestens ein Drehmomentübertragungsmittel (16) mechanisch miteinander in Verbindung stehen, über welches bei rotierender Bewegung der wenigstens einen Antriebswelle (12) die mindestens eine Betätigungswelle (14) zwangsweise mit einer Eigendrehung um ihre Längsachse beaufschlagbar ist.

6. Vorrichtung nach Anspruch 5, bei der das mindestens eine Drehmomentübertragungsmittel (16) wenigstens eine Übersetzungsstufe besitzt, mittels welcher die mindestens eine Betätigungswelle (14) mit erhöhter Drehfrequenz gegenüber der wenigstens einen Antriebswelle (12) beaufschlagbar ist.

7. Vorrichtung nach Anspruch 5 oder 6, bei der das mindestens eine Drehmomentübertragungsmittel (16) zur Beaufschlagung der mindestens einen Betätigungswelle (14) mit ihrer Eigendrehung wenigstens eine Riemen- und/oder Kettenkonstruktion (17) umfasst, welche die wenigstens eine Antriebswelle (12) und die mindestens eine Betätigungswelle (14) zur annähernd zeitsynchronen Drehbewegung miteinander koppelt.

8. Vorrichtung nach Anspruch 5 oder 6, bei der das mindestens eine Drehmomentübertragungsmittel (16) zur Beaufschlagung der mindestens einen Betätigungswelle (14) mit ihrer Eigendrehung wenigstens eine Zahnradübertragungsstufe umfasst, welche die wenigstens eine Antriebswelle (12) und die mindestens eine Betätigungswelle (14) zur annähernd zeitsynchronen Drehbewegung miteinander koppelt.

9. Vorrichtung nach einem oder mehreren der Ansprüche 1 bis 8, bei welcher die wenigstens eine Antriebswelle (12) und die mindestens eine Betätigungswelle (14) teleskopierbar ausgebildet sind.

10. Verfahren zur Handhabung von Artikeln wie Gebinde, Stückgüter oder dergleichen mit einer Vorrichtung, welche umfasst:
- eine obere Aufhängung (3), an welcher wenigstens drei drehbar angetriebene Stellarme (5) befestigt sind, wobei die wenigstens drei drehbar angetriebenen Stellarme (5) jeweils aus wenigstens zwei relativ zueinander schwenkbaren Armabschnitten (7, 9) bestehen und unabhängig voneinander betätigt werden können,
- einen Manipulator, welcher ein oder mehrere Mittel zum Greifen der Artikel umfasst und mit den wenigstens drei Stellarmen (5) mechanisch gekoppelt ist, so dass durch eine Bewegung eines oder mehrerer der wenigstens drei Stellarme (5) eine Position des Manipulators (10) vorgegeben werden kann,
- wenigstens eine Antriebswelle (12), die drehfest mit dem Manipulator in Verbindung steht und
- mindestens eine Betätigungswelle (14), über welche die ein oder mehreren Mittel zum temporären Greifen und Freigeben von Artikeln angesteuert werden können, und **dadurch gekennzeichnet, dass** die mindestens eine Betätigungswelle (14) mit der wenigstens einen Antriebswelle (12) über einen Mitnehmer (15) mechanisch gekoppelt ist, so dass bei rotierender Bewegung der wenigstens einen Antriebswelle (12) der Manipulator und die mindestens eine Betätigungswelle (14) um die Längsachse der wenigstens einen Antriebswelle (12) drehend bewegt werden.

11. Verfahren nach Anspruch 10, bei dem die wenigstens eine Antriebswelle (12) und die mindestens eine Betätigungswelle (14) über mindestens ein Drehmomentübertragungsmittel (16) mechanisch miteinander in Verbindung stehen, welches Drehmomentübertragungsmittel (16) bei rotierender Bewegung der Antriebswelle (12) die mindestens eine Betätigungswelle (14) um ihre Längsachse dreht.

12. Verfahren nach Anspruch 10 oder 11, bei dem das Drehmomentübertragungsmittel (16) die mindestens eine Betätigungswelle (14) um ihre Längsachse mit erhöhter Drehfrequenz gegenüber der mindestens einen Antriebswelle (12) dreht.

13. Verfahren nach einem der Ansprüche 10 bis 12, bei dem die mindestens eine Betätigungswelle (14) um die Längsachse der wenigstens einen Antriebswelle (12) um einen Drehwinkel von wenigstens 360° drehend bewegt wird.

14. Verfahren nach einem der Ansprüche 10 bis 13, bei dem das Mittel oder die mehreren Mittel zum temporären Greifen und Freigeben von Artikeln durch wenigstens zwei sich gegenüberliegende Klemmbacken gebildet ist/sind, welche bei Ansteuerung über die mindestens eine Betätigungswelle (14) selektiv zugestellt oder geöffnet werden.

15. Verfahren nach einem der Ansprüche 10 bis 14, bei welchem bei einer Betätigung eines oder mehrerer der wenigstens drei drehbar angetriebenen Stellarme (5) die mindestens eine Betätigungswelle (14) und die wenigstens eine Antriebswelle (12) jeweils teleskopisch verstellt werden.

## Claims

1. An apparatus (1) for handling articles, such as bundles, piece goods, or the like, comprising:
- an upper suspension (3), to which at least three rotatably driven positioning arms (5) are fastened, wherein the at least three rotatably driven positioning arms (5) each consist of at least two arm sections (7, 9) that are swivelable relative to each other and that can be operated independently of one another;
- a manipulator that comprises one or more means for gripping the articles and that is mechanically coupled to the at least three positioning arms (5) such that a position of the manipulator can be specified by a movement of one or more of the at least three positioning arms (5);
- at least one drive shaft (12) that is linked non-rotatingly to the manipulator such that the manipulator can be rotated by the at least one drive shaft (12); and
- at least one actuating shaft (14) by way of which the one or more means for temporarily gripping and releasing articles can be controlled;
and **characterized by**
- at least one driving member (15) which is linked non-rotatingly to the at least one drive shaft (12) and by which a mechanical coupling is formed between the at least one drive shaft (12) and the at least one actuating shaft (14), with the mechanical coupling serving for rotatingly driving along the at least one actuating shaft (14) about the longitudinal axis of the at least one drive shaft (12).

2. The apparatus as recited in claim 1 in which the longitudinal axis of the at least one actuating shaft (14) and the longitudinal axis of the at least one drive shaft (12) together enclose an acute angle and/or in which the longitudinal axes of the at least one actuating shaft (14) and of the at least one drive shaft (12) are oriented parallel to each other.

3. The apparatus as recited in claim 1 or 2 in which the at least one drive shaft (12) is linked to an actuator (30), which is positioned non-rotatingly on the upper suspension (3).

4. The apparatus as recited in one of the claims 1 to 3 in which the one or more means for gripping the articles comprises or, as the case may be, comprise, at least two clamping jaws located opposite each other, which at least two clamping jaws, upon being controlled by way of the at least one actuating shaft (14), can selectively approach each other or be spaced apart.

5. The apparatus as recited in one of the claims 1 to 4 in which the at least one drive shaft (12) and the at least one actuating shaft (14) are mechanically linked to each other by at least one torque transmission means (16), by way of which the at least one actuating shaft (14) is impingeable with a compulsory self-rotation about its longitudinal axis upon the rotating movement of the at least one drive shaft (12).

6. The apparatus as recited in claim 5 in which the at least one torque transmission means (16) has at least one transmission step, by means of which the at least one actuating shaft (14) is impingeable with the rotational frequency increased in relation to the at least one drive shaft (12).

7. The apparatus as recited in claim 5 or 6 in which, for the purpose of impinging the at least one actuating shaft (14) with its self-rotation, the at least one torque transmission means (16) comprises at least one drive belt construction and/or drive chain construction (17), which couples the at least one drive shaft (12) and the at least one actuating shaft (14) with each other for approximately time-synchronous rotary movement.

8. The apparatus as recited in claim 5 or 6 in which, for the purpose of impinging the at least one actuating shaft (14) with its self-rotation, the at least one torque transmission means (16) comprises at least one gear transmission step, which couples the at least one drive shaft (12) and the at least one actuating shaft (14) with each other for approximately time-synchronous rotary movement.

9. The apparatus as recited in one or more of the claims 1 to 8 in which the at least one drive shaft (12) and the at least one actuating shaft (14) are formed to be telescopically extendable and retractable.

10. A method for handling articles, such as bundles, piece goods, or the like by means of an apparatus, said apparatus comprising:
- an upper suspension (3), to which at least three rotatably driven positioning arms (5) are fastened, wherein the at least three rotatably driven positioning arms (5) each consist of at least two arm sections (7, 9) that are swivelable relative to each other and that can be operated independently of one another;
- a manipulator that comprises one or more means for gripping the articles and that is mechanically coupled to the at least three positioning arms (5) such that a position of the manipulator (10) can be specified by a movement of one or more of the at least three positioning arms (5);
- at least one drive shaft (12) that is linked non-rotatingly to the manipulator; and
- at least one actuating shaft (14) by way of which the one or more means for temporarily gripping and releasing articles can be controlled;
and **characterized in that**
the at least one actuating shaft (14) is mechanically coupled with the at least one drive shaft (12) by way of a driving member (15) such that the manipulator and the at least one actuating shaft (14) are rotatingly moved about the longitudinal axis of the at least one drive shaft (12) upon the rotating movement of the at least one drive shaft (12).

11. The method as recited in claim 10 in which the at least one drive shaft (12) and the at least one actuating shaft (14) are mechanically linked to each other by at least one torque transmission means (16), which causes the at least one actuating shaft (14) to rotate about its longitudinal axis upon the rotating movement of the drive shaft (12).

12. The method as recited in claim 10 or 11 in which the torque transmission means (16) causes the at least one actuating shaft (14) to rotate about its longitudinal axis with the rotational frequency increased in relation to the at least one drive shaft (12).

13. The method as recited in one of the claims 10 to 12 in which the at least one actuating shaft (14) is rotatingly moved about the longitudinal axis of the at least one drive shaft (12) by a rotation angle of at least 360°.

14. The method as recited in one of the claims 10 to 13 in which the one or more means for temporarily gripping and releasing the articles is or, as the case may be, are formed by at least two clamping jaws located opposite each other, which at least two clamping jaws, upon being controlled by way of the at least one actuating shaft (14), can selectively approach each other or be spaced apart.

15. The method as recited in one of the claims 10 to 14 in which the at least one actuating shaft (14) and the at least one drive shaft (12) are each adjusted telescopically upon operating one or more of the at least three rotatably driven positioning arms (5).

## Revendications

1. Dispositif (1) de manipulation d'articles, tels que multipacks, produits de détail ou similaires, comprenant:
- une suspension supérieure (3) sur laquelle sont fixés au moins trois bras de réglage (5) entraînés en rotation, dans lequel lesdits au moins trois bras de réglage (5) entraînés en rotation se composent chacun d'au moins deux sections de bras (7, 9) aptes à pivoter l'une par rapport à l'autre et peuvent être actionnés indépendamment les uns des autres,
- un manipulateur qui comprend un ou plusieurs moyen(s) de préhension des articles et est couplé mécaniquement auxdits au moins trois bras de réglage (5) de sorte qu'une position du manipulateur peut être prédéterminée par un mouvement d'un ou de plusieurs desdits au moins trois bras de réglage (5),
- au moins un arbre d'entraînement (12) qui est relié de manière solidaire en rotation au manipulateur de sorte que le manipulateur peut être tourné par ledit au moins un arbre d'entraînement (12), et
- au moins un arbre de manoeuvre (14) par le biais duquel ledit un ou lesdits plusieurs moyen(s) de préhension et de libération temporaires d'articles peuvent être commandés,
et **caractérisé par**
- au moins un entraîneur (15) qui est relié de manière solidaire en rotation audit au moins un arbre d'entraînement (12) et par le biais duquel est réalisé un couplage mécanique entre ledit au moins un arbre d'entraînement (12) et ledit au moins un arbre de manoeuvre (14), pour entraîner en rotation ledit au moins un arbre de manoeuvre (14) autour de l'axe longitudinal dudit au moins un arbre d'entraînement (12).

2. Dispositif selon la revendication 1, dans lequel l'axe longitudinal dudit au moins un arbre de manoeuvre (14) et l'axe longitudinal dudit au moins un arbre d'entraînement (12) forment l'un avec l'autre un angle aigu, et/ou dans lequel les axes longitudinaux dudit au moins un arbre de manoeuvre (14) et dudit au moins un arbre d'entraînement (12) sont orientés parallèlement l'un à l'autre.

3. Dispositif selon la revendication 1 ou 2, dans lequel ledit au moins un arbre d'entraînement (12) est en liaison avec un actionneur (30) qui repose de manière solidaire en rotation sur ladite suspension supérieure (3).

4. Dispositif selon l'une quelconque des revendications 1 à 3, dans lequel le moyen ou les moyens de préhension des articles comprend ou bien comprennent au moins deux mâchoires de serrage situées en vis-à-vis l'une de l'autre qui, lors d'une commande via ledit au moins un arbre de manoeuvre (14), peuvent être rapprochées ou ouvertes de manière sélective.

5. Dispositif selon l'une quelconque des revendications 1 à 4, dans lequel ledit au moins un arbre d'entraînement (12) et ledit au moins un arbre de manoeuvre (14) sont en liaison mécanique l'un avec l'autre via au moins un moyen de transmission de couple (16) par le biais duquel, lorsque ledit au moins un arbre d'entraînement (12) est en mouvement rotatif, ledit au moins un arbre de manoeuvre (14) peut être soumis par force à une rotation propre autour de son axe longitudinal.

6. Dispositif selon la revendication 5, dans lequel ledit au moins un moyen de transmission de couple (16) possède au moins un étage de multiplication au moyen duquel ledit au moins un arbre de manoeuvre (14) peut être soumis à une fréquence de rotation élevée par rapport audit au moins un arbre d'entraînement (12).

7. Dispositif selon la revendication 5 ou 6, dans lequel ledit au moins un moyen de transmission de couple (16), pour soumettre ledit au moins un arbre de manoeuvre (14) à son rotation propre, comprend au moins une construction à courroie et/ou à chaîne (17) qui couple entre eux ledit au moins un arbre d'entraînement (12) et ledit au moins un arbre de manoeuvre (14) pour un mouvement rotatif approximativement en synchronisme temporel.

8. Dispositif selon la revendication 5 ou 6, dans lequel ledit au moins un moyen de transmission de couple (16), pour soumettre ledit au moins un arbre de manoeuvre (14) à son rotation propre, comprend au moins un étage de transmission à roue dentée qui couple entre eux ledit au moins un arbre d'entraînement (12) et ledit au moins un arbre de manoeuvre (14) pour un mouvement rotatif approximativement en synchronisme temporel.

9. Dispositif selon l'une ou plusieurs des revendications 1 à 8, dans lequel ledit au moins un arbre d'entraînement (12) et ledit au moins un arbre de manoeuvre (14) sont réalisés de manière à être télescopiques.

10. Procédé de manipulation d'articles, tels que multipacks, produits de détail ou similaires, au moyen d'un dispositif qui comprend:
- une suspension supérieure (3) sur laquelle sont fixés au moins trois bras de réglage (5) entraînés en rotation, dans lequel lesdits au moins trois bras de réglage (5) entraînés en rotation se composent chacun d'au moins deux sections de bras (7, 9) aptes à pivoter l'une par rapport à l'autre et peuvent être actionnés indépendamment les uns des autres,
- un manipulateur qui comprend un ou plusieurs moyen(s) de préhension des articles et est couplé mécaniquement auxdits au moins trois bras de réglage (5) de sorte qu'une position du manipulateur (10) peut être prédéterminée par un mouvement d'un ou de plusieurs desdits au moins trois bras de réglage (5),
- au moins un arbre d'entraînement (12) qui est relié de manière solidaire en rotation au manipulateur, et
- au moins un arbre de manoeuvre (14) par le biais duquel ledit un ou lesdits plusieurs moyen(s) de préhension et de libération temporaires d'articles peuvent être commandés,
et **caractérisé par le fait que**
ledit au moins un arbre de manoeuvre (14) est couplé mécaniquement audit au moins un arbre d'entraînement (12) par l'intermédiaire d'un entraîneur (15) de sorte que, lors d'un mouvement rotatif dudit au moins un arbre d'entraînement (12), ledit manipulateur et ledit au moins un arbre de manoeuvre (14) sont déplacés en rotation autour de l'axe longitudinal dudit au moins un arbre d'entraînement (12).

11. Procédé selon la revendication 10, dans lequel ledit au moins un arbre d'entraînement (12) et ledit au moins un arbre de manoeuvre (14) sont en liaison mécanique l'un avec l'autre via au moins un moyen de transmission de couple (16), lequel moyen de transmission de couple (16) fait tourner ledit au moins un arbre de manoeuvre (14) autour de son axe longitudinal lors d'un mouvement rotatif de l'arbre d'entraînement (12).

12. Procédé selon la revendication 10 ou 11, dans lequel ledit moyen de transmission de couple (16) fait tourner ledit au moins un arbre de manoeuvre (14) autour de son axe longitudinal à une fréquence de rotation élevée par rapport audit au moins un arbre d'entraînement (12).

13. Procédé selon l'une quelconque des revendications 10 à 12, dans lequel ledit au moins un arbre de manoeuvre (14) est déplacé en rotation d'un angle de rotation d'au moins 360° autour de l'axe longitudinal dudit au moins un arbre d'entraînement (12).

14. Procédé selon l'une quelconque des revendications 10 à 13, dans lequel le moyen ou les plusieurs moyens de préhension et de libération temporaires d'articles est/sont formé(s) par au moins deux mâchoires de serrage situées en vis-à-vis l'une de l'autre qui, lors d'une commande via ledit au moins un arbre de manoeuvre (14), sont rapprochées ou ouvertes de manière sélective.

15. Procédé selon l'une quelconque des revendications 10 à 14, dans lequel, lors d'un actionnement d'un ou de plusieurs desdits au moins trois bras de réglage (5) entraînés en rotation, ledit au moins un arbre de manoeuvre (14) et ledit au moins un arbre d'entraînement (12) sont réglés chacun de manière télescopique.
